# EUROPÄISCHE PATENTSCHRIFT

(11) **EP 3 402 126 B1**
(45) Veröffentlichungstag und Bekanntmachung des Hinweises auf die Patenterteilung: **28.08.2019**
(21) Anmeldenummer: 17170229.3
(22) Anmeldetag: 09.05.2017
(51) Int. Cl.: H04L 12/28

(54) **VERFAHREN UND SYSTEM ZUM VERTEILTEN ERKENNEN VON OBJEKTEN UND GEFAHREN**
METHOD AND SYSTEM FOR DISTRIBUTED IDENTIFICATION OF OBJECTS AND HAZARDS
PROCÉDÉ ET SYSTÈME DE DÉTECTION DISTRIBUÉE D'OBJETS ET DE DANGERS

(43) Veröffentlichungstag der Anmeldung: 14.11.2018
(73) Patentinhaber: Deutsche Telekom AG, 53113 Bonn (DE)
(72) Erfinder: HEIDER-AVIET, Andreas, 13187 Berlin (DE); HETZER, Dirk, 12683 Berlin (DE)
(74) Vertreter: Vossius & Partner Patentanwälte Rechtsanwälte mbB

(56) Entgegenhaltungen:
- EP-A1- 3 054 405
- EP-A1- 3 062 489
- US-A1- 2004 049 771
- US-A1- 2011 072 206

## Beschreibung

Die Erfindung betrifft die Automatisierung von Maschinen, insbesondere die Erkennung von Objekten und/oder Gefahren durch autonome Internet of Things (Internet der Dinge) Geräte.

In einer digitalisierten Umgebung werden zunehmend intelligente Gegenstände verwendet, die auch zunehmend mit künstlicher Intelligenz ausgestattet sind. Gemeinsam bilden diese intelligenten Gegenstände das Internet of Things (IOT). Im IOT miteinander vernetzte intelligente Geräte werden als IOT Geräte bezeichnet. Das IOT soll zukünftig den Menschen unterstützen, wobei der Mensch nicht unbedingt mit den einzelnen Geräten steuernd interagiert, stattdessen sollen sich einzelne IOT Geräte untereinander abstimmen und so den Menschen von der Steuerung entlasten. Neben mehr oder weniger unbeweglichen, zumindest nicht selbstständig zu einer Bewegung fähigen, IOT Geräten, gibt es auch IOT Geräte, die sich selbstständig bewegen und im Folgenden als autonome IOT Geräte bezeichnet werden.

Unter dem Begriff autonome IOT Geräte fallen ausdrücklich auch jene Geräte, die üblicherweise als teilautonom, automatisiert bzw. teilautomatisiert, selbst organisiert oder selbst kontrolliert bezeichnet werden. Je nach verwendeter Definition ergeben sich aus den Begriffen besondere Abgrenzungen. Die autonomen IOT Geräte dieser Beschreibung zeichnen sich dadurch aus, dass sie voneinander und vorzugsweise auch von zentraler und/oder menschlicher Kontrolle unabhängig sind.

Sobald sich mehrere autonome IOT Geräte in einem räumlich begrenzten Gebiet befinden ist eine Erkennung von Objekten und/oder Gefahren durch die mehreren IOT Geräte notwendig. Die verbesserte Erkennung von Objekten und/oder Gefahren stellt die Grundaufgabe dieser Erfindung dar.

Prinzipiell wäre eine zentrale Verarbeitung der durch mehrere IOT Geräte erkannten Objekte und Gefahren möglich. Jedoch steht dies im Gegensatz zu dem Grundgedanken autonom interagierender IOT Geräte.

EP 3 054 405 A1 offenbart ein Verfahren zum Austauch von Steuerungsinformationen in einem lokalen Netzwerk. Jeder Knoten ist als Distributed Consensus Node konfiguriert. Die Knoten verteilen Konfigurations- und andere Steuerungsinformationen untereinander. Ein consensus algorithm wird verwendet, um die Konfigurationen der Knoten untereinander abzustimmen. Diese abgestimmten Informationen werden dann in einem Distributed Ledger eines jeden Knotens abgespeichert.

Es ist daher eine Aufgabe der vorliegenden Erfindung, ein System und Verfahren zur verteilten Erkennung von Objekten und/oder Gefahren zur Verfügung zu stellen, das eine verteilten Erkennung von Objekten und/oder Gefahren erlaubt ohne dabei jedes einzelne IOT Geräte direkt und/oder zentral steuern zu müssen.

Diese Aufgaben werden von dem erfindungsgemäßen Gegenstand der unabhängigen Patentansprüche gelöst. Die abhängigen Ansprüche betreffen weitere Aspekte der Erfindung.

Erfindungsgemäß wird ein System und ein Verfahren auf den Prinzipien einer sogenannten Blockchain aufgebaut, um eine Koordinierung autonomer IOT Geräte in einem dezentralen und/oder teilweise dezentralen Konsens bildenden Netzwerk zu nutzen. Ein solches Netzwerk wird als Distributed Consensus Network (DCN) bezeichnet und der stattfindende Abstimmungsprozess wird als DCN-Prozess bezeichnet.

Die Erfindung beruht dabei auf der Nutzung eines oder mehrerer Prinzipien aus den als Blockchain bezeichneten Verfahren. Bei dem Blockchain Verfahren wird eine verteilte Datenbank, das sogenannte Distributed Ledger (DL) genutzt. Das Distributed Ledger beinhaltet dabei als Listenelemente so genannte Facts und wird gleichzeitig auf allen an dem Verfahren teilnehmenden mehreren Mitgliedern eines öffentlichen oder privaten Netzwerkes, vorzugweise eines peer-to-peer Netzwerks, geführt.

Die einzelnen Mitglieder des Netzwerks können anonym sein und werden als Knoten bezeichnet. Für die Kommunikation im Netzwerk können die Vorteile der Kryptographie genutzt werden, um Sender und Empfänger im Netzwerk eindeutig zu identifizieren und so die Verbindungssicherheit zu erhöhen.

Sobald ein Knoten einen Fact zu dem DL hinzufügen möchte, wird zwischen den Mitgliedern des Netzwerks ein Konsens ausgehandelt, in dem bestimmt wird, ob der vorgeschlagene Fact und/oder eine Gruppe von Facts in das DL aufgenommen wird. Die durch den Konsens validierte Gruppe an Facts wird als Block bezeichnet. Mehrere hintereinander gefügte Blöcke im DL bilden die namensgebende Blockchain. Ein Block enthält dabei eine Information, vorzugsweise einen Hash-Wert, über einen früheren Block, vorzugsweise den jeweils letzten Block der Blockchain, wodurch die Sicherheit und Unveränderbarkeit der Blockchain erreicht werden kann. In allen nachfolgenden Ausführungsformen der Erfindung ist innerhalb eines DCN jeder Knoten mit allen anderen Knoten verbunden. Die Verbindung kann direkt, d.h. peer-to-peer, oder über eine zentrale Stelle, d.h. hierarchisch, erfolgen.

Das Blockchain Verfahren ist dem Fachmann hinreichend bekannt, und es existiert eine Reihe von Begriffen, die der Fachmann in diesem Zusammenhang mit einer besonderen Bedeutung belegt hat. Die folgende Beschreibung der Erfindung wird diese Begriffe aufgreifen und, sofern nicht anders ausgeführt, umfassen diese Begriffe die dem Fachmann geläufigen Ausführungsformen und Merkmale.

Das Blockchain Verfahren ist dem Fachmann hinreichend bekannt, und es existiert eine Reihe von Begriffen, die der Fachmann in diesem Zusammenhang mit einer besonderen Bedeutung belegt hat. Die folgende Beschreibung der Erfindung wird diese Begriffe aufgreifen und, sofern nicht anders ausgeführt, umfassen diese Begriffe die dem Fachmann geläufigen Ausführungsformen und Merkmale.

Als erfindungsgemäß wird beansprucht ein Verfahren mit mindestens zwei Vorrichtungen zur verteilten Erkennung von Objekten und/oder Gefahren, wobei jede Vorrichtung mindestens eine Sensoreinheit aufweist und konfiguriert ist, mit der Sensoreinheit Objekte und/oder Gefahren zu erkennen. Ferner sind die Vorrichtungen über mindestens eine Netzwerkverbindung für einen Datenaustausch miteinander verbunden und weisen jeweils mindestens einen Distributed Konsensus Netzwerk, DCN, Knoten auf. Die DCN-Knoten sind konfiguriert, an einem DCN Prozess teilzunehmen. Das Verfahren weist folgende Schritte auf:
a) unabhängiges Erkennen von Objekten und/oder Gefahren in jeder Vorrichtung,
b) Austauschen von Informationen über die erkannten Objekten und/oder Gefahren zwischen den Vorrichtungen in dem DCN,
c) Durchführen eines Programmablaufs zum Bewerten der empfangenen Informationen über die erkannten Objekten und/oder Gefahren in einem jeden DCN-Knoten,
d) Abstimmen der erkannten Objekten und/oder Gefahren in dem DCN Prozess unter Verwendung eines Konsens-Algorithmus, in dem zwischen den DCN-Knoten, in mindestens einer Konsens-Abstimmungsrunde, Vorschläge, basierend auf dem Ergebnis des Pragrammablaufs, für erkannte Objekten und/oder Gefahren mit den anderen DCN-Knoten ausgetauscht werden,
e) Aufnehmen des ermittelten Konsens der erkannten Objekten und/oder Gefahren als ein nächster Block in einem Distributed Ledger, DL, des DCN.

Für das erfindungsgemäße System und Verfahren ist das Aushandeln eines Konsens für ein zukünftiges Zeitintervall von besonderer Bedeutung. An der Aushandlung sind in der Regel mehrere Knoten beteiligt. Für die Aushandlung wird ein sogenannter Konsens-Algorithmus verwendet. Dieser Algorithmus wird auf allen beteiligten Knoten ausgeführt. Dem Fachmann sind mehrere Konsens-Algorithmen bekannt, die unterschiedliche Anforderungen erfüllen, und jeweils auf spezifische Problemstellungen angepasst werden können.

In einer Ausführungsform wird der Konsens-Algorithmus zusammen auf allen beteiligten Knoten ausgeführt. Mit anderen Worten im Konsens-Algorithmus findet eine Abstimmung über den nächsten Fact zwischen den einzelnen Knoten statt.

Das Zeitintervall kann fest sein oder kann dynamisch an die Situation angepasst werden. In einigen Ausführungsformen können die Dauer und der Zeitpunkt an dem das Zeitintervall beginnt Teil des ausgehandelten Konsenses sein. In anderen Ausführungsformen werden die Dauer des Zeitintervalls und der Zeitpunkt an dem das Zeitintervall beginnt vorbestimmt und/oder wird zentral verwaltet.

Die oben genannten Programmabläufe können in einigen Ausführungsformen einfachste vorbestimmte Überprüfungen von Bedingungen umfassen. Alternativ oder ergänzend sind auch komplexere Interaktionen mit der Hard-/Software des IOT Gerätes möglich. Weiter können alternativ oder ergänzend die Programmabläufe in einigen Ausführungsformen auch mit den oben genannten Smart Contracts interagieren.

In einem Aspekt der Erfindung basiert das unabhängige Erkennen von Objekten und/oder Gefahren auf der Auswertung von Sensordaten, die von der Sensoreinheit gewonnen wurden. Alternativ oder ergänzend ist die Sensoreinheit bevorzugt eine der folgenden Sensoreinheiten: eine optische Sensoreinheit, eine Radarsensoreinheit, einer Lichtsensoreinheit, und/oder eine Ultraschallsensoreinheit. Weiter alternativ oder ergänzend beruht das Erkennen der Objekte und/oder Gefahren auf der Auswertung von anderen Datenquellen, vorzugsweise einer Cooperative Awareness Message, ETSI ITS CAM, einer Decentralized Environmental Notification Messages, ETSI ITS DENM, und/oder Informationen empfangen über ein Fahrzeugherstellerbackend und/oder Informationen aus dem Internet.

In einem weiteren Aspekt der Erfindung enthält die Informationen über die erkannten Objekte und/oder Gefahren mindestens eine der folgenden Information: eine Information über die Position des Objekts und/oder der Gefahr, eine Information über eine Bewegungsrichtung des Objekts und/oder der Gefahr, eine Information über eine Geschwindigkeit des Objekts und/oder der Gefahr, eine Information über einen Typ des Objekts und/oder der Gefahr und/oder weitergehende Inhalte analog der CAM- und/oder DENM-Spezifikation.

In einem weiteren Aspekt der Erfindung ist mindestens eine der Vorrichtungen mobil.

In einem weiteren Aspekt der Erfindung sind die DCN-Knoten in den Vorrichtungen dazu konfiguriert, an mindestens einem gemeinsamen DCN-Prozess teilzunehmen, wenn sie sich in einem vorbestimmten gemeinsamen räumlichen Bereich befinden.

In einem weiteren Aspekt der Erfindung ist mindestens ein weiterer Knoten im DCN enthalten ist, wobei der weitere Knoten ein Master-Knoten ist.

In einem weiteren Aspekt der Erfindung ist der Master-Knoten in einem Mobile Edge Computing (MEC) Server ausgebildet, der vorzugweise an einer Mobilfunk Basisstation bereit gestellt ist, und/oder die eine der autonomen Vorrichtungen ist ein Teilnehmer im Straßen-, Schienen-, Flug-, Schiffsverkehr, oder ein sonstiger Roboter und/oder die andere der autonomen Vorrichtungen ist eine Vorrichtung zur Koordinierung des Straßen-, Schienen-, Zug-, Schiffs- oder Flugverkehrs, oder sonstiger Roboter. In diesem Fall können die oben genannten Managementfunktionen in die Mobilfunkinfrastruktur und ein Backend integriert werden.

Insbesondere sind solche Konsens-Algorithmen bekannt, in denen einige Knoten eine besondere Wichtigkeit haben und im Rahmen der Aushandlung eine größere oder gar eine bestimmende Rolle einnehmen können und andere Knoten weniger relevant oder gar unbedeutend sind. Die Knoten mit besonderer Wichtigkeit werden als Master-Knoten bezeichnet.

In einem weiteren Aspekt der Erfindung bestimmt der Master-Knoten die räumliche Ausdehnung des vorbestimmten gemeinsamen räumlichen Bereichs. Alternativ oder ergänzend bestimmt der Master-Knoten, welche DCN-Knoten sich innerhalb des vorbestimmten gemeinsamen räumlichen Bereichs befinden und/oder an dem DCN-Prozess teilnehmen.

In einem weiteren Aspekt der Erfindung ist der Master-Knoten dazu konfiguriert, das DL zu archivieren und den DCN-Prozess auszuwerten.

In einem weiteren Aspekt der Erfindung ist der Master-Knoten dazu konfiguriert, neue Programmabläufe an die DCN-Knoten im DCN zu verteilen, und wobei die DCN-Knoten dazu konfiguriert sind, neue Programabläufe von dem Master-Knoten zu empfangen.

In einem weiteren Aspekt der Erfindung ist mindestens ein DCN-Knoten, vorzugweise ein Master-Knoten, dazu konfiguriert, ein entscheidungstragender Knoten zu sein, und in der Abstimmung im Schritt d) eine Entscheidung über die Erfassung herbeiführen zu können. Alternativ oder ergänzend ist mindestens ein DCN-Knoten, vorzugweise ein Master-Knoten, dazu konfiguriert, ein entscheidungstragender Knoten zu sein, und ein Zeitfenster für den nächsten Erfassungsblock festlegen zu können.

In einem weiteren Aspekt der Erfindung ist der Master-Knoten in einem Mobile Edge Computing, MEC, Server ausgebildet, der vorzugweise an einer Infrastrukturkomponente, insbesondere bevorzugt an einer Mobilfunk Basisstation, bereitgestellt ist. Alternativ oder ergänzend ist die eine der Vorrichtungen ein Teilnehmer im Straßen-, Schienen-, Flug-, Schiffsverkehr, oder ein sonstiger Roboter ist. Weiter alternativ oder ergänzend ist die andere der autonomen Vorrichtungen eine Vorrichtung zur Koordinierung des Straßen-, Schienen-, Zug-, Schiffs- oder Flugverkehrs, oder sonstiger Roboter ist.

In einem weiteren Aspekt der Erfindung wird das DCN unter Nutzung einer Netzwerktechnologie gebildet, die eine vorbestimmte Verfügbarkeit, eine vorbestimmte Latenz, und/oder einen vorbestimmten Datendurchsatz hat. Alternativ oder ergänzend wird das DCN unter Nutzung von mindestens einer der folgenden Netzwerktechnologien gebildet: Mobilfunk-Datenverbindung, WiFi-Datenverbindung, Bluetooth-Datenverbindung, und/oder optische Datenverbindung.

Weiter wird als erfindungsgemäß beansprucht eine Vorrichtung zur verteilten Erkennung von Objekten und/oder Gefahren, wobei die Vorrichtung mindestens eine Sensoreinheit aufweist und konfiguriert ist, mit der Sensoreinheit Objekte und/oder Gefahren zu erkennen; wobei die Vorrichtung über mindestens eine Netzwerkverbindung für einen Datenaustausch mit mindestens einer weiteren Vorrichtung zur verteilten Erkennung von Objekten und/oder Gefahren verbunden ist; wobei die Vorrichtung mindestens einen Distributed Konsensus Netzwerk, DCN, Knoten aufweist und der DCN-Knoten konfiguriert sind, ein Verfahren nach einem der voranstehenden Aspekte durchzuführen.

Ebenfalls als erfindungsgemäß wird beansprucht ein System zur verteilten Erkennung von Objekten und/oder Gefahren mit mindestens zwei erfindungsgemäße Vorrichtungen, wobei die Vorrichtungen mindestens einem DCN-Knoten aufweisen und dazu konfiguriert sind, ein Verfahren nach einem der voranstehenden Aspekte durchzuführen.

Ebenfalls als erfindungsgemäß wird beansprucht ein System zur verteilten Erkennung von Objekten und/oder Gefahren, wobei das System mindestens zwei der voranstehenden Systeme aufweist, die über ein Backend verbunden sind; und das Backend dazu konfiguriert ist, ein lokales, regionales, nationales und/oder internationales DCN-Netzwerk zu bilden; und/oder wobei das Backend dazu konfiguriert ist, die Master-Knoten zu überwachen, und/oder zu verwalten; und insbesondere dazu konfiguriert ist, Programablaufkomponenten in den Master-Knoten zu löschen, hinzuzufügen und/oder auszutauschen.

Der Fachmann erkennt die wesentlichen Vorteile die sich aus der Verwendung des Distributed Ledger Prinzips ergeben. Es handelt sich um ein dezentralisiertes System, so dass das Verfahren selbst dann durchgeführt werden kann, wenn einige Knoten sich nicht am Abstimmungsprozess beteiligen, oder beteiligen können. Diese Knoten und deren geplante Handlungen werden vorzugsweise dennoch in die Konsensfindung mit einbezogen und stellen kein Problem (sondern eher einen Vorteil) für die Abstimmung des Verhaltens der anderen Knoten dar.

In einer bevorzugten Ausführungsform wird eine Public Key Infrastruktur (PKI) verwendet, um eine sichere Kommunikation zwischen den einzelnen Netzwerknoten zu erlauben. Erfindungsgemäß evaluiert jeder Knoten für sich jeweils alle und/oder nur die für ihn relevanten Facts der anderen Knoten, wozu ein Programmablauf ausgeführt wird. In einem Abstimmungsprozess wird ein Block vorgeschlagen. Alle Knoten können den vorgeschlagenen Block lesen und für oder gegen diesen Block abstimmen. Abhängig von der Situation können mehrere Abstimmungsrunden nötig sein, bis ein Konsens ausgehandelt wurde. Alternativ können nur bestimmte Knoten, vorzugsweise Master-Knoten, den vorgeschlagenen Block lesen und für oder gegen diesen Block abstimmen. Abhängig von der Situation können mehrere Abstimmungsrunden nötig sein, bis ein Konsens ausgehandelt wurde.

Im Allgemeinen ist ein Abstimmungsprozess jedoch oft zeitkritisch. Dieses Problem wird durch Ausführungsformen gelöst, die einen Master-Knoten verwenden. Alternativ wird dieses Problem wird durch Ausführungsformen gelöst, in denen bestimmte Knoten, vorzugsweise Knoten die an Infrastrukturkomponenten ausgebildet sind, eine höhere Gewichtung in der Konsens-Abstimmung haben.

### Kurze Beschreibung der Figuren

In den Abbildungen zeigt
- Fig. 1: eine schematische Darstellung einer Ausführungsform des erfindungsgemäßen Verfahrens, und
- Fig. 2: ein Blockdiagram für eine Ausführungsform des erfindungsgemäßen Verfahrens.

### Beschreibung der Figuren

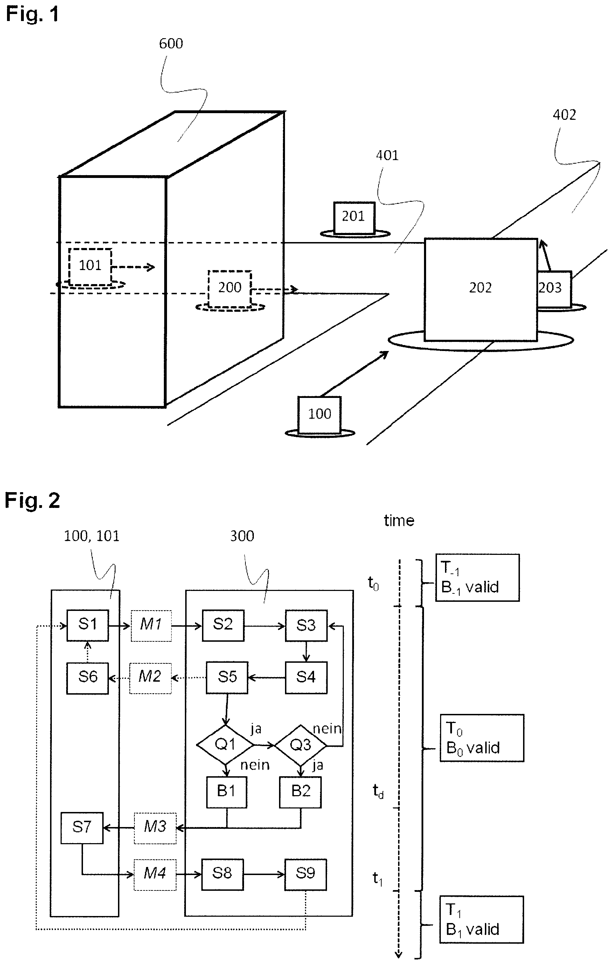

Fig. 1 zeigt eine schematische Darstellung einer Ausführungsform des erfindungsgemäßen Verfahrens. Es ist eine Situation an einer Straßenkreuzung dargestellt an der sich eine Straße 401 in einer T-Kreuzung auf eine zweite Straße trifft. Eine erste erfindungsgemäße mobile Vorrichtung 101 bewegt sich auf der Straße 401 in Richtung der Straße 402. Eine zweite mobile Vorrichtung 100 bewegt sich auf der Straße 402. Weiter sind Objekte 200, 201, 202 und 203 gezeigt. Der Pfeil an den Vorrichtungen 100 und 101 sowie den Objekten 200 und 203 zeigt die Bewegungsrichtung des jeweiligen Objekts an. die Objekte 201 und 202 sind stationär. In einer Ausführungsform sind die mobilen Vorrichtungen autonome Fahrzeuge. Objekt 202 könnte eine Parkender LKW oder eine Baustelle sein, die zumindest für die Vorrichtung 100 ein Detektieren des Objekts 203 zumindest teilweise behindert oder vollständig verhindert. Objekt 200 könnte ein Fahrradfahrer sein. Objekt 203 könnte ein Fußgänger sein. Objekt 203 könnte alternative ein Hund sein, d.h. eine andere Gefahr darstellen. Ein weiteres Objekt 600, beispielsweise ein Haus, schränkt die Sicht beider Vorrichtungen ein.

Beide Vorrichtungen erfassen ihre Umgebung mit ihren jeweiligen Sensoreinrichtungen, anschließend stimmen sie das Ergebnis in einem Blockchain-Prozess miteinander ab. Dazu werden in beiden Vorrichtungen Programmabläufe zur Abstimmung ausgeführt. Ziel der Abstimmung ist es ein möglichst vollständiges Erfassen aller Objekte im räumlichen Gebiet (Straßenkreuzung) zu ermöglichen. Bei Vorrichtung 100 liegen zu Beginn der Abstimmung Informationen über Objekte 201 und 202 vor, sowie unvollständige Informationen über Objekt 203. Bei Vorrichtung 101 liegen zu Beginn der Abstimmung Informationen über Objekte 200, 201 und 203 vor, hingegen können die Informationen über Objekt 202 unvollständig sein. Während des Abstimmungsprozess werden nun die jeweiligen Informationen als Facts den jeweilig anderen Vorrichtungen vorgeschlagen und dann im Rahmen mindestens einer Abstimmungsrunde eine Lösung gefunden die für beide Vorrichtungen akzeptabel ist, d.h. mindestens dieselbe oder eine mehrheitlich bessere Erfassung mindestens der jeweils selbst erfassten Objekte enthalten ist..

Das Abstimmungsergebnis wird dann in die Blockchain aufgenommen. Somit ist gewährleistet, dass sogar zeitweilig verdeckte Objekte verbindlich erfasst werden. Vorrichtung 101 gewinnt bei der Abstimmung Informationen über Objekt 202 und ergänzend die Position von Vorrichtung 100. Im Gegenzug gewinnt Vorrichtung 100 Informationen über Objekt 200 und ergänzend die Information über die Position von Vorrichtung 101. Zusätzlich stimmen sich beide Vorrichtungen über die Erfassung des Objekts 203 ab, vorzugsweise über die Position und den Objekttyp. Dabei kann beispielsweise entschieden werden, dass 101 die bessere Sicht auf 203 hat als Vorrichtung 100 und deshalb dass Erfassungsergebnis von 101 als Fact in die Blockchain aufgenommen wird. Alternativ kann das Erfassungsergebnis von 101 durch das Erfassungsergebnis von 100 ergänzt werden oder umgekehrt.

Nach der Abstimmung im Blockchain Prozess liegen bei beiden Vorrichtungen 100 und 101 ein vollständiges Erfassungsergebnis für alle Objekte vor. In weiteren Ausführungsformen, verfügt beispielsweise eine Verkehrsampel an Position 202 über eigene Sensoreinheiten und nimmt an dem DCN teil. Da die Ampel eine gute Sicht in beide Straßen 401 und 402 hat, könnte sie als Master-Knoten ausgeführt sein, und ihr Erfassungsergebnis könnte eine höhere Gewichtung haben.

Neben der direkten Abstimmung der Erfassungsergebnisse in einem Peer-to-Peer artigen DCN, wäre auch eine Abstimmung in einem teil-, oder vollzentralisierten DCN möglich.

Fig. 2 zeigt ein Blockdiagram für eine Ausführungsform des erfindungsgemäßen Verfahrens. Im Schritt S1 werden in den jeweiligen Vorrichtungen 100 und 101 Objekte und/oder Gefahren erkannt. Die Informationen über erkannte Objekte werden zusammengefasst und in einer Nachricht M1 an das DCN 300, welches in dieser Ausführungsform aus den Vorrichtungen 100 und 101 besteht, gesendet. Ferner enthält die Nachricht M1 vorzugsweise weitere Informationen über Position, Typ, Erkennungswahrscheinlichkeit und/oder Typenwahrscheinlichkeit sowie eine ID für die jeweilig erkannten Objekte und/oder Gefahren. Ebenfalls bevorzugt sind in der Nachricht M1 Informationen zur zeitlichen Abstimmung der Knoten und zur Synchronisation weiterer Nachrichten enthalten.

Im Schritt S2 werden die Erfassungsergebnisse von mehreren Vorrichtungen 100, 101 im DCN zusammengetragen, vorzugsweise in einer Vorrichtung im DCN. Anschließend, in Schritt S3 werden die Erfassungsergebnisse hinsichtlich der ID und der erfassten Position, vorzugweise einer GPS Lokalisierung, harmonisiert. In Schritt S4 werden dann die jeweilig erfassten Typen und Wahrscheinlichkeiten zusammengetragen. In Schritt S5 wird dann ein Block berechnet, der möglichst alle erfassten Objekte und /oder Gefahren oder zumindest die am wahrscheinlichsten erfassten Objekte und wahrscheinlichsten Typen und/oder Gefahren enthält.

Eine Zeit t_{d} bestimmt sich aus der Größe des aktuellen Zeitintervalls T0 unter Bezugnahme der Latenzzeit des langsamsten Knotens und aus der Zeit bis zum Beginn des zu planenden Intervalls T1 falls dieses nicht das folgende, sondern ein weiter in der Zukunft liegendes Intervall ist. Es muss sichergestellt werden, dass alle nachfolgenden Schritte nach S5 ausgeführt werden können, bevor das aktuelle Zeitintervall beendet ist bzw. das zu planende Intervall beginnt.

Falls möglich wird im Schritt S5 eine Nachricht M2 an die Vorrichtungen 100 und 101 übermittelt, die auf dem Ergebnis der Berechnungen in S5 beruht und im Wesentlichen wie M1 aufgebaut ist. In den Vorrichtungen 100 und 101 wird im Schritt S6 ermittelt, ob und wie sich die in der Vorrichtung vorliegenden Informationen mit den vorgeschlagenen Facts aus M2 vereinbaren lassen und somit eine neue Nachricht M1 generiert wird. Die Schritte S1 bis S6 werden je nach Situation mehrfach ausgeführt, der Schritt S6 und die Übermittlung M2 können in einigen Ausführungsformen entfallen.

In Schritt Q1 wird ermittelt ob in Hinsicht auf t_{d} noch genügend Zeit vorhanden ist um einen konfliktfreien und möglichst kompletten Block zu ermitteln, der mit allen Einzelerfassungen übereinstimmt. Falls das Ergebnis von Q1"nein" ist, wird der aktuelle Block B1 für die nachfolgenden Schritte verwendet. Falls der Ergebnis von Q1 "ja" ist, wird in Q2 ermittelt ob der Block konfliktfrei und komplett ist, falls nein werden die Schritte S3 bis S5 nochmals durchgeführt, wobei dies auch S1 bis S2 beinhalten kann, sofern neue M1 empfangen wurden. Dies geschieht solange bis Q1 "nein" oder Q2 "ja" ergibt. Falls das Ergebnis von Q2 ,ja" war, wird der Block als B2 für die nachfolgenden Schritte verwendet.

Nachdem der endgültige Block B1 oder B2 festgelegt wurde wird dieser in der Nachricht M3 vom DCN an alle Vorrichtungen im DCN gesendet, damit der Block ab der Zeit t1 für das Intervall T1 gültig wird.

Im Schritt S7 wird der Block in der Vorrichtung 100, 101 empfangen und angewendet. In einer Ausführungsform wird anschließend dem DCN in einer Nachricht M4 der Status der Vorrichtung übermittelt.

In Schritt S8 werden die Statusnachrichten M4 aller Vorrichtungen inklusive 100 und 101 gesammelt und in Schritt S9 der Block aus M3 zu der Blockchain hinzugefügt. Anschließend kann die Planung für ein weiteres Intervall mit einer erneuten Ausführung des Schritt S1 beginnen.

Die beiden Abschnitte t₀ bis t_{d} und t_{d} bis t₁ sind in dieser Beschreibung nur zum Zwecke einer übersichtlicheren Darstellung nacheinander angeordnet. In einer Ausführungsform können aus Effizienzgründen beide Abschnitte parallel für verschiedene zukünftige Intervalle ablaufen, und/oder Nachrichten M1 und M4 sowie M2 und M3 zusammengefasst werden. Auch können je nach verwendetem Konsenzalgorithmen zusätzliche Nachrichten ausgetauscht werden, etwa in einer pre-commit-Phase und einer commit-Phase, um das Empfangen der Nachrichten und eine erfolgreiche Konsenzbildung sicherzustellen.

Dem Fachmann ist jedoch erkenntlich, dass bestimmte Prinzipien und Merkmale üblicher Blockchain-Prozesse nicht optimal für die Verwendung in den genannten Ausführungsbeispielen geeignet sind. Abhängig von der verwendeten Technologie muss jeweils die komplette Blockchain in jedem Knoten gespeichert sein und jeder dem DCN neu hinzugefügte Knoten muss die bisherige Blockchain laden. Um das erfindungsgemäße DCN zu bilden, müssen mobile Knoten die einzelne Blockchain jedoch nur solange wie unbedingt notwendig und/oder gesetzlich vorgeschrieben speichern. Neue Blöcke können hinzugefügt werden, ohne dass diese notwendigerweise einen vorausgehenden Block besitzen müssen. Mit anderen Worten die Knoten müssen nicht die gesamte vorherige Blockchain laden. Insbesondere bei Ausführungsformen mit MEC-Server kann die Blockchain auch zentral im MEC-Server verwaltet werden, die teilnehmenden Knoten müssen dann nur jeweils einige wenige Blöcke laden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Die Offenbarung umfasst insbesondere auch solche Ausführungsformen, die ausschließlich die in den Ansprüchen beziehungsweise in den Ausführungsbeispielen beschriebenen Merkmale umfassen sowie auch solche, die zusätzliche andere Merkmale umfassen.

## Patentansprüche

1. Verfahren mit mindestens zwei Vorrichtungen (100, 101) zur verteilten Erkennung von Objekten (200, 201, 202, 203) und/oder Gefahren,
wobei jede Vorrichtung (100, 101) mindestens eine Sensoreinheit aufweist und konfiguriert ist, mit der Sensoreinheit Objekte (200, 201, 202, 203) und/oder Gefahren zu erkennen;
wobei die Vorrichtungen (100, 101) über mindestens eine Netzwerkverbindung für einen Datenaustausch miteinander verbunden sind;
wobei die Vorrichtungen (100, 101) jeweils mindestens einen Distributed Konsensus Netzwerk, DCN, Knoten aufweisen und die DCN-Knoten konfiguriert sind, an einem DCN Prozess teilzunehmen; und
wobei das Verfahren folgende Schritte aufweist:
a) unabhängiges Erkennen von Objekten (200, 201, 202, 203) und/oder Gefahren in jeder Vorrichtung (100, 101),
b) Austauschen von Informationen über die erkannten Objekte (200, 201, 202, 203) und/oder Gefahren zwischen den Vorrichtungen (100, 101) in dem DCN,
c) Durchführen eines Programmablaufs zum Bewerten der empfangenen Informationen über die erkannten Objekte (200, 201, 202, 203) und/oder Gefahren in einem jeden DCN-Knoten,
d) Abstimmen der erkannten Objekte (200, 201, 202, 203) und/oder Gefahren in dem DCN Prozess unter Verwendung eines Konsens-Algorithmus, in dem zwischen den DCN-Knoten, in mindestens einer Konsens-Abstimmungsrunde, Vorschläge, basierend auf dem Ergebnis des Programmablaufs, für erkannte Objekte (200, 201, 202, 203) und/oder Gefahren mit den anderen DCN-Knoten ausgetauscht werden, und
e) Aufnehmen des ermittelten Konsens der erkannten Objekte (200, 201, 202, 203) und/oder Gefahren als ein nächster Block in einem Distributed Ledger, DL, des DCN.

2. Verfahren nach Anspruch 1,
wobei das unabhängige Erkennen von Objekten (200, 201, 202, 203) und/oder Gefahren auf der Auswertung von Sensordaten basiert, die von der Sensoreinheit gewonnen wurden und/oder
wobei die Sensoreinheit bevorzugt eine der folgenden Sensoreinheiten ist: eine optische Sensoreinheit, eine Radarsensoreinheit, eine Lichtsensoreinheit, und/oder eine Ultraschallsensoreinheit und/oder
wobei das Erkennen der Objekte (200, 201, 202, 203) und/oder Gefahren auf der Auswertung von anderen Datenquellen, vorzugsweise einer Cooperative Awareness Message, ETSI ITS CAM, einer Decentralized Environmental Notification Message, ETSI ITS DENM, und/oder Informationen empfangen über ein Fahrzeugherstellerbackend und/oder Informationen aus dem Internet beruht.

3. Verfahren nach Anspruch 1 oder 2, wobei die Informationen über die erkannten Objekte und/oder Gefahren mindestens eine der folgenden Informationen enthält: eine Information über die Position des Objekts (200, 201, 202, 203) und/oder der Gefahr, eine Information über eine Bewegungsrichtung des Objekts und/oder der Gefahr, eine Information über eine Geschwindigkeit des Objekts (200, 201, 202, 203) und/oder der Gefahr, eine Information über einen Typ des Objekts (200, 201, 202, 203) und/oder der Gefahr und/oder weitergehende Inhalte analog der CAM- und/oder DENM-Spezifikation.

4. Verfahren nach einem der Ansprüche 1 bis 3, wobei mindestens eine der Vorrichtungen (100, 101) mobil ist.

5. Verfahren nach einem der Ansprüche 1 bis 4,
wobei die DCN-Knoten in den Vorrichtungen (100, 101) dazu konfiguriert sind, an mindestens einem gemeinsamen DCN Prozess teilzunehmen, wenn sie sich in einem vorbestimmten gemeinsamen räumlichen Bereich befinden.

6. Verfahren nach einem der Ansprüche 1 bis 5,
wobei mindestens ein weiterer Knoten im DCN enthalten ist,
wobei der weitere Knoten ein Master-Knoten ist.

7. Verfahren nach Anspruch 6,
wobei der Master-Knoten die räumliche Ausdehnung des vorbestimmten gemeinsamen räumlichen Bereichs bestimmt, und/oder
wobei der Master-Knoten bestimmt, welche DCN-Knoten sich innerhalb des vorbestimmten gemeinsamen räumlichen Bereichs befinden und/oder an dem DCN Prozess teilnehmen.

8. Verfahren nach einem der Ansprüche 6 oder 7,
wobei der Master-Knoten dazu konfiguriert ist, das DL zu archivieren und den DCN Prozess auszuwerten.

9. Verfahren nach einem der Ansprüche 6 bis 8,
wobei der Master-Knoten dazu konfiguriert ist, neue Programmabläufe an die DCN-Knoten im DCN zu verteilen, und
wobei die DCN-Knoten dazu konfiguriert sind, neue Programmabläufe von dem Master-Knoten zu empfangen.

10. Verfahren nach einem der Ansprüche 6 bis 9,
wobei mindestens ein DCN-Knoten, vorzugweise ein Master-Knoten, dazu konfiguriert ist, ein entscheidungstragender Knoten zu sein, und in der Abstimmung im Schritt d) eine Entscheidung über die Erfassung herbeiführen zu können und/oder
wobei mindestens ein DCN-Knoten, vorzugweise ein Master-Knoten, dazu konfiguriert ist, ein entscheidungstragender Knoten zu sein, und ein Zeitfenster für den nächsten Erfassungsblock festlegen zu können.

11. Verfahren nach einem der Ansprüche 6 bis 10,
wobei der Master-Knoten in einem Mobile Edge Computing, MEC, Server ausgebildet ist, der vorzugweise an einer Infrastrukturkomponente, insbesondere bevorzugt an einer Mobilfunk Basisstation, bereitgestellt ist, und/oder
wobei die eine der Vorrichtungen (100, 101) ein Teilnehmer im Straßen-, Schienen-, Flug-, Schiffsverkehr, oder ein sonstiger Roboter ist und/oder
wobei die andere der autonomen Vorrichtungen (100, 101) eine Vorrichtung zur Koordinierung des Straßen-, Schienen-, Zug-, Schiffs- oder Flugverkehrs, oder sonstiger Roboter ist.

12. Verfahren nach einem der Ansprüche 1 bis 11,
wobei das DCN unter Nutzung einer Netzwerktechnologie gebildet wird, die eine vorbestimmte Verfügbarkeit, eine vorbestimmte Latenz, und/oder einen vorbestimmten Datendurchsatz hat; und/oder
wobei das DCN unter Nutzung von mindestens einer der folgenden Netzwerktechnologien gebildet wird: Mobilfunk-Datenverbindung, WiFi-Datenverbindung, Bluetooth-Datenverbindung, und/oder optische Datenverbindung.

13. Vorrichtung zur verteilten Erkennung von Objekten (200, 201, 202, 203) und/oder Gefahren,
wobei die Vorrichtung (100, 101) mindestens eine Sensoreinheit aufweist und konfiguriert ist, mit der Sensoreinheit Objekte (200, 201, 202, 203) und/oder Gefahren zu erkennen;
wobei die Vorrichtung (100, 101) über mindestens eine Netzwerkverbindung für einen Datenaustausch mit mindestens einer weiteren Vorrichtung zur verteilten Erkennung von Objekten (200, 201, 202, 203) und/oder Gefahren verbunden ist;
wobei die Vorrichtung mindestens einen Distributed Konsensus Netzwerk, DCN, Knoten aufweist und konfiguriert ist, mit mindestens einer weiteren Vorrichtung zur verteilten Erkennung von Objekten (200, 201, 202, 203) zusammenzuwirken, und
wobei die DCN-Knoten der mindestens zwei Vorrichtungen konfiguriert sind, ein Verfahren nach einem der Ansprüche 1 bis 11 durchzuführen.

14. System zur verteilten Erkennung von Objekten (200, 201, 202, 203) und/oder Gefahren mit mindestens zwei Vorrichtungen (100, 101) nach Anspruch 13, wobei die Vorrichtungen (100, 101) mindestens einen DCN-Knoten aufweisen und dazu konfiguriert sind, ein Verfahren nach einem der Ansprüche 1 bis 11 durchzuführen.

15. Ein Backend-System zur verteilten Erkennung von Objekten (200, 201, 202, 203) und/oder Gefahren,
wobei das Backend-System mindestens zwei Systeme nach Anspruch 14 aufweist, die über ein Backend verbunden sind; und
das Backend dazu konfiguriert ist, ein lokales, regionales, nationales und/oder internationales DCN-Netzwerk zu bilden; und/oder
wobei das Backend dazu konfiguriert ist, die Master-Knoten zu überwachen, und/oder zu verwalten; und insbesondere dazu konfiguriert ist, Programmablaufkomponenten in den Master-Knoten zu löschen, hinzuzufügen und/oder auszutauschen.

## Claims

1. A method comprising at least two devices (100, 101) for distributed identification of objects (200, 201, 202, 203) and/or hazards,
wherein each device (100, 101) comprises at least one sensor unit and is configured to identify objects (200, 201, 202, 203) and/or hazards by means of the sensor unit,
wherein the devices (100, 101) are connected to each other via at least one network connection for a data exchange,
wherein the devices (100, 101) each comprise a Distributed Consensus Network, DCN, node and the DCN nodes are configured to participate in a DCN process, and wherein the method comprises the following steps:
(a) independently identifying objects (200, 201, 202, 203) and/or hazards in each device (100, 101),
(b) exchanging information about the identified objects (200, 201, 202, 203) and/or hazards between the devices (100, 101) in the DCN,
(c) performing a program run for evaluating the received information about the identified objects (200, 201, 202, 203) and/or hazards in each DCN node,
(d) adjusting the identified objects (200, 201, 202, 203) and/or hazards in the DCN process using a consensus algorithm in which, in at least one consensus adjustment round, suggestions for identified objects (200, 201, 202, 203) and/or hazards are exchanged among the DCN nodes with the other DCN nodes based on the result of the program run, and
(e) including the determined consensus of the identified objects (200, 201, 202, 203) and/or hazards as a next block in a Distributed Ledger, DL, of the DCN.

2. The method of claim 1,
wherein the independent identification of objects (200, 201, 202, 203) and/or hazards is based on the evaluation of sensor data acquired by the sensor unit and/or
wherein the sensor unit is preferably one of the following sensor units: an optical sensor unit, a radar sensor unit, a light sensor unit, and/or an ultrasonic sensor unit and/or
wherein the identification of the objects (200, 201, 202, 203) and/or hazards is based on the evaluation of other data sources, preferably a Cooperative Awareness Message, ETSI ITS CAM, of a Decentralized Environmental Notification Message, ETSI ITS DENM, and/or information received via a vehicle manufacturer backend and/or information from the Internet.

3. The method of claim 1 or 2, wherein the information about the identified objects and/or hazards includes at least one of the following information: information about the position of the object (200, 201, 202, 203) and/or the hazard, information about a movement direction of the object and/or hazard, information about a speed of the object (200, 201, 202, 203) and/or the hazard, information about a type of the object (200, 201, 202, 203) and/or the hazard and/or further contents analogously to the CAM and/or DENM specification.

4. The method of any one of claims 1 to 3, wherein at least one of the devices (100, 101) is mobile.

5. The method of any one of claims 1 to 4,
wherein the DCN nodes in the devices (100, 101) are configured to participate in at least one common DCN process when they are in a predetermined common spatial region.

6. The method of any one of claims 1 to 5,
wherein at least one further node is contained in the DCN,
wherein the further node is a master node.

7. The method of claim 6,
wherein the master node determines the spatial extension of the predetermined common spatial region, and/or
wherein the master node determines which DCN nodes are within the predetermined common spatial region and/or participate in the DCN process.

8. The method of claim 6 or 7,
wherein the master node is configured to archive the DL and evaluate the DCN process.

9. The method of any one of claims 6 to 8,
wherein the master node is configured to distribute new program runs to the DCN nodes in the DCN, and
wherein the DCN nodes are configured to receive new program runs from the master node.

10. The method of any one of claims 6 to 9,
wherein at least one DCN node, preferably a master node, is configured to be a decision-bearing node and able to cause a decision about the detection in the adjustment of step (d) and/or
wherein at least one DCN node, preferably a master node, is configured to be a decision-bearing node and able to determine a time frame for the next detection block.

11. The method of any one of claims 6 to 10,
wherein the master node is formed in a Mobile Edge Computing, MEC, server which is provided preferably at an infrastructure component, particularly preferably at a mobile communications base station, and/or
wherein one of the devices (100, 101) is a participant in road traffic, rail traffic, air traffic, shipping traffic, or any other robot, and/or
wherein the other one of the autonomous devices (100, 101) is a device for coordinating the road traffic, rail traffic, train service, shipping traffic or air traffic, or any other robot.

12. The method of any one of claims 1 to 11,
wherein the DCN is formed by using a network technology having a predetermined availability, a predetermined latency, and/or a predetermined data throughput, and/or
wherein the DCN is formed by using at least one of the following network technologies: mobile communications data connection, WiFi data connection, Bluetooth data connection, and/or optical data connection.

13. A device for distributed identification of objects (200, 201, 202, 203) and/or hazards,
wherein the device (100, 101) comprises at least one sensor unit and is configured to identify objects (200, 201, 202, 203) and/or hazards by means of the sensor unit,
wherein the device (100, 101) is connected to at least one further device for distributed identification of objects (200, 201, 202, 203) via at least one network connection for a data exchange,
wherein the device comprises at least one Distributed Consensus Network, DCN, node and is configured to cooperate with at least one further device for distributed identification of objects (200, 201, 202, 203) and/or hazards, and
wherein the DCN nodes of the at least two devices are configured to perform a method according to any one of claims 1 to 11.

14. A system for distributed identification of objects (200, 201, 202, 203) and/or hazards comprising at least two devices (100, 101) according to claim 13, wherein the devices (100, 101) comprise at least one DCN node and are configured to perform a method according to any one of claims 1 to 11.

15. A backend system for distributed identification of objects (200, 201, 202, 203) and/or hazards,
wherein the backend system comprises at least two systems according to claim 14 which are connected via a backend, and
the backend is configured to form a local, regional, national and/or international DCN network, and/or
wherein the backend is configured to monitor and/or manage the master nodes, and is in particular configured to delete, add and/or exchange program run components in the master nodes.

## Revendications

1. Procédé avec au moins deux dispositifs (100, 101) pour la détection distribuée d'objets (200, 201, 202, 203) et/ou de dangers,
où chaque dispositif (100, 101) comprend au moins une unité de capteur et est configuré pour détecter des objets (200, 201, 202, 203) et/ou des dangers au moyen de l'unité de capteur ;
où les dispositifs (100, 101) sont reliés entre eux par au moins une connexion réseau pour un échange de données ;
où les dispositifs (100, 101) présentent chacun au moins un noeud de réseau consensuel distribué, DCN, et où les noeuds DCN sont configurés pour participer à un processus DCN ; et
où ledit procédé comprend les étapes suivantes :
a) détection indépendante d'objets (200, 201, 202, 203) et/ou de dangers dans chaque dispositif (100, 101),
b) échange d'informations sur les objets (200, 201, 202, 203) et/ou les dangers détectés entre les dispositifs (100, 101) dans le DCN,
c) exécution d'un programme pour analyser les informations reçues sur les objets (200, 201, 202, 203) et/ou les dangers détectés dans chaque noeud DCN,
d) sélection des objets (200, 201, 202, 203) et/ou des dangers détectés dans le processus DCN en recourant à un algorithme de consensus, où entre les noeuds DCN, dans au moins un tour de vote par consensus, des propositions pour des objets (200, 201, 202, 203) et/ou des dangers détectés basées sur le résultat de l'exécution du programme sont échangées avec les autres noeuds DCN, et
e) enregistrement du consensus déterminé pour les objets (200, 201, 202, 203) et/ou les dangers détectés en tant que bloc suivant dans un registre distribué, DL, du DCN.

2. Procédé selon la revendication 1,
où la détection indépendante d'objets (200, 201, 202, 203) et/ou de dangers est basée sur l'analyse de données de capteur acquises par l'unité de capteur, et/ou
où l'unité de capteur est préférentiellement une des unités de capteur suivantes : une unité de capteur optique, une unité de capteur radar, une unité de capteur de lumière et/ou une unité de capteur à ultrasons, et/ou
où la détection des objets (200, 201, 202, 203) et/ou des dangers se base sur l'analyse d'autres sources de données, préférentiellement d'un message de sensibilisation coopérative, ETSI ITS CAM, d'un message de notification environnementale décentralisée, ETSI ITS DENM, et/ou d'informations reçues d'un back-end de constructeur automobile et/ou d'informations provenant d'Internet.

3. Procédé selon la revendication 1 ou la revendication 2, où les informations sur les objets et/ou les dangers détectés comprennent au moins une des informations suivantes : une information sur la position de l'objet (200, 201, 202, 203) et/ou du danger, une information sur une direction de déplacement de l'objet et/ou du danger, une information sur une vitesse de l'objet (200, 201, 202, 203) et/ou du danger, une information sur un type de l'objet (200, 201, 202, 203) et/ou du danger et/ou de plus amples contenus conformément à la spécification CAM et/ou la spécification DENM.

4. Procédé selon l'une des revendications 1 à 3, où au moins un des dispositifs (100, 101) est mobile.

5. Procédé selon l'une des revendications 1 à 4,
où les noeuds DCN dans les dispositifs (100, 101) sont configurés pour participer à au moins un processus DCN commun, s'ils se trouvent dans une zone spatiale commune définie.

6. Procédé selon l'une des revendications 1 à 5,
où au moins un autre noeud est compris dans le DCN, ledit autre noeud étant un noeud maître.

7. Procédé selon la revendication 6,
où le noeud maître détermine l'extension spatiale de la zone spatiale commune définie, et/ou
où le noeud maître détermine les noeuds DCN qui se trouvent à l'intérieur de la zone spatiale commune définie et/ou participent au processus DCN.

8. Procédé selon la revendication 6 ou la revendication 7,
où le noeud maître est configuré pour archiver le DL et analyser le processus DCN.

9. Procédé selon l'une des revendications 6 à 8,
où le noeud maître est configuré pour répartir de nouvelles exécutions de programme entre les noeuds DCN dans le DCN, et
où les noeuds DCN sont configurés pour recevoir de nouvelles exécutions de programme du noeud maître.

10. Procédé selon l'une des revendications 6 à 9,
où au moins un noeud DCN, préférentiellement un noeud maître, est configuré pour être un noeud porteur de décision, et pour pouvoir parvenir à une décision relative à la détection lors de la sélection de l'étape d), et/ou
où au moins un noeud DCN, préférentiellement un noeud maître, est configuré pour être un noeud porteur de décision, et pour pouvoir définir une fenêtre temporelle pour le bloc de détection suivant.

11. Procédé selon l'une des revendications 6 à 10,
où le noeud maître est réalisé dans un serveur informatique en périphérie mobile, MEC, prévu préférentiellement sur un composant d'infrastructure, en particulier préférentiellement sur une station de base de téléphonie mobile, et/ou
où le premier des dispositifs (100, 101) est un participant au trafic routier, sur rail, maritime ou un autre robot, et/ou
où l'autre dispositif autonome (100, 101) est un dispositif pour la coordination du trafic routier, sur rail, en train, maritime ou aérien, ou un autre robot.

12. Procédé selon l'une des revendications 1 à 11,
où le DCN est formé en recourant à une technologie de réseau présentant une disponibilité prédéfinie, une latence prédéfinie, et/ou un débit de données prédéfini ; et/ou
où le DCN est formé en recourant à au moins une des technologies de réseau suivantes : transmission de données par téléphonie mobile, transmission de données par WiFi, transmission de données par Bluetooth et/ou transmission optique de données.

13. Dispositif pour la détection distribuée d'objets (200, 201, 202, 203) et/ou de dangers,
où ledit dispositif (100, 101) comprend au moins une unité de capteur et est configuré pour détecter des objets (200, 201, 202, 203) et/ou des dangers au moyen de l'unité de capteur ;
où le dispositif (100, 101) est relié par au moins une connexion réseau pour un échange de données à au moins un autre dispositif pour la détection distribuée d'objets (200, 201, 202, 203) et/ou de dangers ;
où le dispositif comprend au moins un noeud de réseau consensuel distribué, DCN, et est configuré pour coopérer avec au moins un autre dispositif pour la détection distribuée d'objets (200, 201, 201, 203), et
où les noeuds DCN des au moins deux dispositifs sont configurés pour exécuter un procédé selon l'une des revendications 1 à 11.

14. Système pour la détection distribuée d'objets (200, 201, 202, 203) et/ou de dangers avec au moins deux dispositifs (100, 101) selon la revendication 13, les dispositifs (100, 101) comprenant au moins un noeud DCN et étant configurés pour exécuter un procédé selon l'une des revendications 1 à 11.

15. Système back-end pour la détection distribuée d'objets (200, 201, 202, 203) et/ou de dangers,
où ledit système back-end comprend au moins deux systèmes selon la revendication 14, reliés par un back-end ; et
où le back-end est configuré pour former un réseau DCN local, régional, national et/ou international ; et/ou
où le back-end est configuré pour surveiller et/ou pour administrer les noeuds maîtres ; et est en particulier configuré pour supprimer, ajouter et/ou échanger des composants d'exécution de programme dans le noeud maître.
